# EUROPÄISCHE PATENTANMELDUNG

(11) **EP 2 667 451 A1**
(43) Veröffentlichungstag der Anmeldung: **27.11.2013**
(21) Anmeldenummer: 13167821.1
(22) Anmeldetag: 15.05.2013
(51) Int. Cl.: H01R 9/24

(54) **Steckbare Klemme und elektronisches Gerät mit steckbarer Klemme**

(30) Priorität: 25.05.2012 DE 102012208899
(71) Anmelder: MCQ TECH GmbH, 78176 Blumberg (DE)
(72) Erfinder: Borst, Joachim, 78166 Donaueschingen (DE); Stadler, Hermann, 78166 Donaueschingen (DE); Gruber, Wilfried, 73760 Ostfildern (DE); Veit, Andreas, 73760 Ostfildern (DE); Cech, Markus, 73760 Ostfildern (DE)
(74) Vertreter: Patentanwälte Westphal, Mussgnug & Partner

(57) **Zusammenfassung**

Die Erfindung betrifft eine steckbare Klemme (100) mit Klemmelementen zum Anschluss mindestens eines elektrischen oder optischen Leiters und mit ersten Verbindungselementen (15) zum Verbinden des mindestens einen elektrischen oder optischen Leiters mit einem elektronischen Gerät, wobei die steckbare Klemme (100) einen Speicher (7) für Daten aufweist und dass Mittel zum Auslesen und/oder Speichern von Daten im Speicher durch das elektronische Gerät vorgesehen sind, sowie ein mittels Konfigurationsdaten konfigurierbares elektronisches Gerät mit einer daran lösbar angeordneten, steckbaren Klemme (100), wobei die steckbare Klemme (100) einen Speicher (7) für die Konfigurationsdaten aufweist.

## Beschreibung

Die Erfindung betrifft eine steckbare Klemme mit den Merkmalen des Oberbegriffs des Patentanspruchs 1 und ein elektronisches Gerät mit einer derartigen Klemme.

Ein wesentlicher Aspekt heute verwendeter elektronischer Geräte ist ihre hohe Adaptierbarkeit an unterschiedliche Verwendungen. Mit dieser Adaptierbarkeit geht jedoch einher, dass eine optimale Nutzung der Fähigkeiten eines gegebenen elektronischen Geräts für eine bestimmte Verwendung in der Regel voraussetzt, dass das Gerät für diesen Einsatzzweck konfiguriert wurde und dass die zugehörigen Konfigurationsdaten so in einem Speicher hinterlegt sind, dass das elektronische Gerät darauf zugreifen kann.

Die Konfiguration selbst muss insbesondere bei industriell eingesetzten elektronischen Geräten oft von höher qualifiziertem Personal als den üblichen Bedienern des Gerätes durchgeführt werden und kann erhebliche Mengen von Zeit beanspruchen. Ärgerlich ist dies insbesondere immer dann, wenn ein Gerät wegen eines Defektes repariert oder ersetzt werden muss, weil in diesen Fällen ein Austauschgerät eingesetzt werden muss, das dann wiederum konfiguriert werden muss.

Um den damit verbundenen Zeit- und Kostenaufwand weitestgehend zu vermeiden, ist es bekannt, die Konfigurationsdaten auf einem wechselbaren Speichermedium, beispielsweise einer SD-Karte, zu speichern, die in dem Gerät auswechselbar angeordnet ist. Dadurch wird es möglich, die Konfiguration eines Austauschgeräts, das die Funktion eines defekten Geräts übernehmen soll, durch Entnahme des wechselbaren Speichermediums aus dem Gerät, das durch das Austauschgerät ersetzt wird, und Einsetzen des wechselbaren Speichermediums in das Austauschgerät auszuführen. Dieser Prozess ist in der Regel wesentlich schneller ausführbar als eine komplette Neukonfiguration des Austauschgeräts und kann zudem auch von geringer qualifiziertem Personal selbständig ausgeführt werden.

Wenngleich diese Vorgehensweise in der Theorie die oben diskutierte Problematik löst, zeigt sich in der Praxis, dass dies nicht der Fall ist. In der Hektik, die der Ausfall eines Geräts mit sich bringt, wird nämlich oft vergessen, das Speichermedium auch tatsächlich aus dem defekten Gerät zu entfernen. Erst wenn das Austauschgerät da ist und die Konfigurationsdaten eingesetzt werden sollen, stellt sich heraus, dass das Speichermedium mit dem defekten Gerät entsorgt oder zur Reparatur eingeschickt wurde, was dann keine andere Alternative lässt, als doch eine aufwändige Neukonfiguration vorzunehmen.

Die Aufgabe der Erfindung besteht daher darin, eine Möglichkeit zur Speicherung von Konfigurationsdaten eines elektronischen Geräts auf einem Wechseldatenträger bereitzustellen, bei der die tatsächliche Verfügbarkeit der Konfigurationsdaten im Fall eines Austausches des Geräts verbessert ist, ohne dabei den Vorteil des leicht wechselbaren Speichers zu verlieren.

Diese Aufgabe wird gelöst durch eine steckbare Klemme mit den Merkmalen des Anspruchs 1 und ein elektronisches Gerät mit daran lösbar angeordneter steckbarer Klemme mit den Merkmalen des Anspruchs 11. Vorteilhafte Ausgestaltungen der Erfindung sind Gegenstand der Unteransprüche.

Die erfindungsgemäße steckbare Klemme weist Klemmelemente zum Anschluss mindestens eines elektrischen oder optischen Leiters und erste Verbindungselemente zum Verbinden des mindestens einen elektrischen oder optischen Leiters mit einem elektronischen Gerät auf.

Erfindungswesentlich ist, dass die steckbare Klemme einen Speicher für Daten aufweist und dass Mittel zum Auslesen und/oder Speichern von Daten im Speicher durch das elektronische Gerät vorgesehen sind.

Die Erfindung beruht auf der Erkenntnis, dass in den meisten Fällen beim Austausch eines Geräts, sei es zum Zwecke seiner Entsorgung oder zu seiner Reparatur, nur das Gerät selbst, nicht aber seine Verbindungen zu anderen Geräten, mit denen es kommuniziert und/oder interagiert, oder seine Verbindungen zur Stromversorgung vom Einsatzort des Geräts entfernt werden.

Daher kann durch die durch die kennzeichnenden Merkmale des Anspruchs 1 bewirkte Schaffung der Möglichkeit, die Konfigurationsdaten in einer steckbaren Klemme, die für die Kommunikation des elektronischen Geräts mit der Außenwelt und/oder für dessen Stromversorgung in einer Vielzahl von Fällen ohnehin vorhanden ist und die beim Austausch des Gerätes mit den Anschlusskabeln verbunden bleibt, zu hinterlegen, die Verfügbarkeit von Konfigurationsdaten für Austauschgeräte signifikant verbessert werden.

In einer vorteilhaften Ausführungsform können die Mittel zum Auslesen und/oder Speichern von Daten im Speicher durch das elektronische Gerät als in der Klemme angeordnete elektrische und/oder optische Kontakte ausgebildet sein. Der Zugriff von dem elektronischen Gerät auf den Speicher erfolgt somit über die Klemme, wobei prinzipiell zwischen dem elektronischen Gerät und der Klemme eine elektrische oder optische Datenübertragung und zwischen der Klemme und dem Speicher eine elektrische oder optische Datenübertragung erfolgen kann.

Gemäß einer vorteilhaften Ausführungsform der Erfindung sind die Mittel als eine drahtlose Verbindung zwischen dem Speicher und dem elektronischen Gerät ausgebildet, beispielsweise basierend auf der RFID-Technik oder in Form einer optischen Verbindung. Auf diese Weise ist auch eine direkte Kommunikation zwischen dem elektronischen Gerät und dem Speicher möglich.

In Abhängigkeit von Art und Einsatzzweck des elektrischen oder elektronischen Geräts ist es vorteilhaft, wenn die ersten Verbindungselemente als Kontaktstifte, als Federkontakte oder als Leiterplattenrandkontakte ausgebildet sind.

Grundsätzlich kann der Speicher fest an oder in der Klemme vorgesehen sein, besonders bewährt hat es sich jedoch, wenn der Speicher entfernbar, insbesondere steckbar mit der Klemme verbunden ist. Dies stellt eine einfache Auswechselbarkeit des Speichers, beispielsweise für den Fall, dass die Gerätekonfiguration gegen eine neue ausgetauscht werden soll, sicher.

Grundsätzlich kann der Speicher als Bauteil, Baugruppe oder Speicherkarte ausgebildet sein. Eine besonders einfache Realisationsmöglichkeit für einen auswechselbaren, steckbaren Speicher ergibt sich jedoch, wenn dieser als Speicherkarte ausgebildet ist.

In einer besonders bevorzugten Weiterbildung der Erfindung besitzt die steckbare Klemme elektrische Kontakte zur Kontaktierung des steckbaren Speichers, die mit zweiten Verbindungselementen zur Verbindung mit dem elektronischen Gerät elektrisch verbunden sind. Dies ermöglicht es, das Interface zum elektronischen Gerät einfach zu halten.

Eine bevorzugte Weiterentwicklung dieses Aspekts sieht vor, dass die elektrischen Kontakte zur Kontaktierung des steckbaren Speichers jeweils einstückig mit einem zweiten Verbindungselement zur Verbindung mit dem elektronischen Gerät ausgeführt sind. Dadurch kann das Risiko von Kontaktverlusten minimiert werden. Besonders kostengünstig ist dies zu erreichen, wenn die einstückig ausgeführten elektrischen Kontakte und zweiten Verbindungselemente Stanz- oder Stanz-Biegeteile sind.

Ein unbefugtes Entfernen eines steckbaren Speichers kann verhindert werden, wenn der Speicher in einer Richtung in die steckbare Klemme einsteckbar ist, die (vektoriell betrachtet) zumindest eine Komponente aufweist, die entgegen der Steckrichtung der steckbaren Klemme, d.h. entgegen der Richtung, in die die steckbare Klemme auf das elektronische Bauteil oder Gerät aufgesteckt wird, gerichtet ist. Dies führt dazu, dass im aufgesteckten Zustand der Klemme das elektronische Bauteil oder Gerät das Entfernen des steckbaren Speichers verhindert oder zumindest behindert. Idealerweise weist die Steckrichtung des steckbaren Speichers nur eine Komponente, die derart gerichtet ist, auf.

Mit Vorteil ist vorgesehen, dass der Speicher von außen durch eine Öffnung in die steckbare Klemme einsteckbar ist. Dadurch ist er einfach montierbar und einfach zugänglich.

Das erfindungsgemäße, mittels Konfigurationsdaten konfigurierbare elektronische Gerät mit einer daran lösbar angeordneten, steckbaren Klemme besitzt eine steckbare Klemme, die einen Speicher für die Konfigurationsdaten aufweist, insbesondere eine erfindungsgemäße steckbare Klemme. Ergänzend wird darauf hingewiesen, dass ein elektrisches Gerät in der Regel als ein elektronisches Bauelement mit weiteren Anbauteilen angesehen werden kann.

Neben den vorstehend genannten Weiterbildungsmöglichkeiten der steckbaren Klemme, welche sich jeweils direkt übertragen lassen, sieht eine bevorzugte Ausgestaltung eines derartigen elektronischen Bauteils vor, dass der Speicher für Konfigurationsdaten, den die steckbare Klemme aufweist, der einzige Speicher für Konfigurationsdaten ist und somit der nach dem Stand der Technik am elektronischen Gerät vorzusehende Speicher für Konfigurationsdaten entfallen kann.

Die Erfindung wird nachfolgend anhand von Zeichnungen exemplarisch erläutert. Es zeigen:
- Fig.1:: eine Ansicht eines Ausführungsbeispiels der Erfindung mit nicht eingestecktem steckbaren Speicher,
- Fig.2:: das Ausführungsbeispiel der Erfindung gemäß Fig. 1 mit eingestecktem steckbaren Speicher,
- Fig.3:: einen Schnitt durch die Darstellung der Fig.2 im Bereich der Aufnahme für den steckbaren Speicher, und
- Fig.4:: einen Schnitt durch die Darstellung der Fig.2 im Bereich einer Anschlussklemme.

Da alle Figuren dasselbe Ausführungsbeispiel betreffen, werden in allen Figuren identische Bezugszeichen verwendet, wobei zur Verbesserung der Übersichtlichkeit und Erleichterung der Konzentration auf wesentliche Aspekte der jeweiligen Figuren teilweise nicht alle Bezugszeichen in alle Figuren eingetragen wurden.

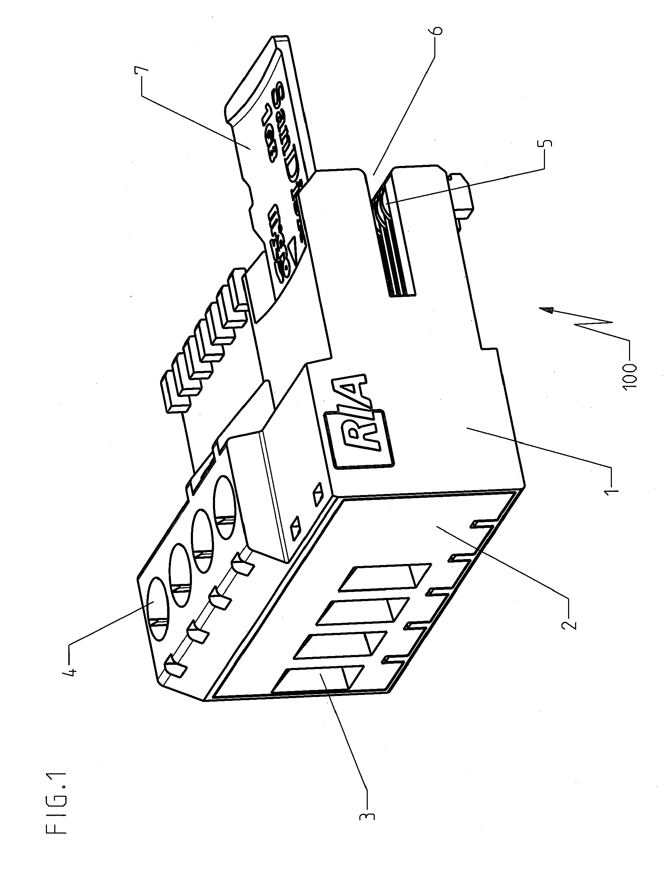

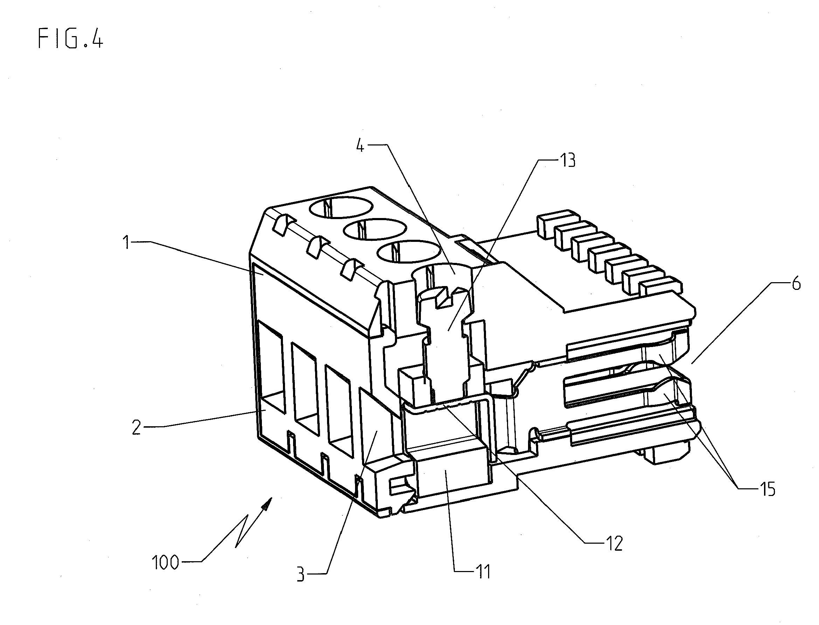

Figur 1 zeigt eine steckbare Klemme 100 mit einem Klemmengehäuse 1 mit einem Deckel 2, welcher vier nebeneinander angeordnete Drahteinführungsöffnungen 3 aufweist. Das Klemmengehäuse 1 weist ferner vier Öffnungen 4 für nur in Figur 4 erkennbare Klemmschrauben 13 auf. Die Öffnungen 4 stehen senkrecht zu den Drahteinführungsöffnungen 3 und sind jeweils einer der Drahteinführungsöffnungen 3 zugeordnet.

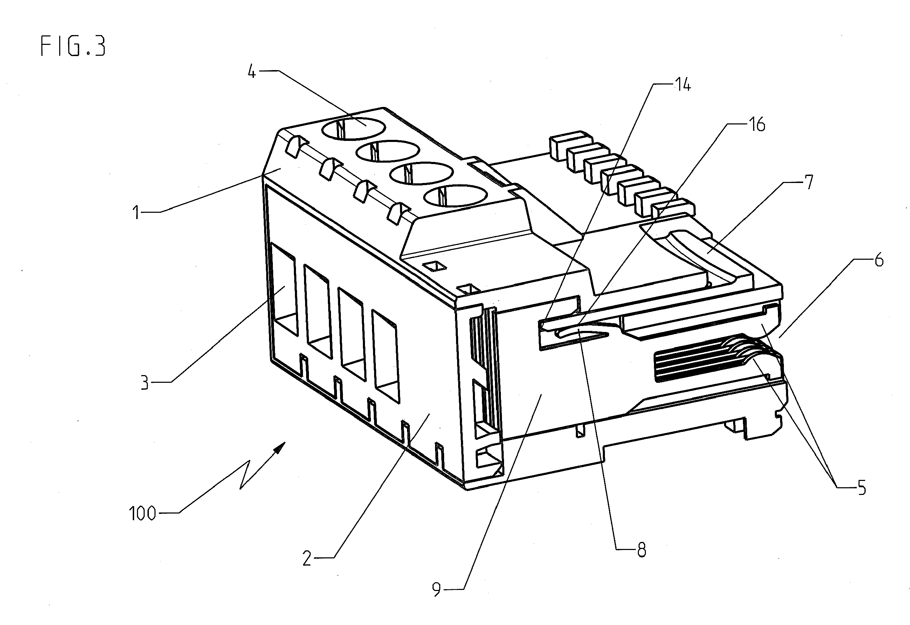

An der dem Deckel 2 gegenüberliegenden Seite der steckbaren Klemme 100 weist diese eine schlitzförmige Öffnung 6 zur Aufnahme einer nicht dargestellten Leiterplatte eines elektronischen Geräts mit Leiterplattenrandkontakten auf. Die leitende Verbindung zu den Leiterplattenrandkontakten der Leiterplatte, wenn diese in die schlitzförmige Öffnung 6 eingeschoben ist, wird über Verbindungselemente 5, 15, die hier als Kontaktfedern ausgestaltet sind, und auf den inneren Wandflächen der schlitzförmigen Öffnung 6 angeordnet sind, hergestellt. Wie besonders gut in der Schnittdarstellung der Figur 3 zu erkennen ist, ist parallel und oberhalb zur schlitzförmigen Öffnung 6 verlaufend ein Aufnahmeschacht 14 für einen Speicher 7 für Daten, der hier als SD-Speicherkarte und somit steckbar ausgebildet ist, angeordnet. Dabei ist vorteilhafterweise der Aufnahmeschacht 14 von außen durch eine Öffnung zugänglich, so dass der Speicher 7 von außen durch die Öffnung in die steckbare Klemme, insbesondere in den Aufnahmeschacht 14 der steckbaren Klemme, steckbar ist.

Diese Anordnung, die dazu führt, dass der steckbare Speicher 7 entgegengesetzt zur Steckrichtung der steckbaren Klemme 100 eingesteckt wird, führt dazu, dass bei gesteckter Klemme 100 der steckbare Speicher 7 nur unter erheblich erschwerten Umständen entfernt werden kann.

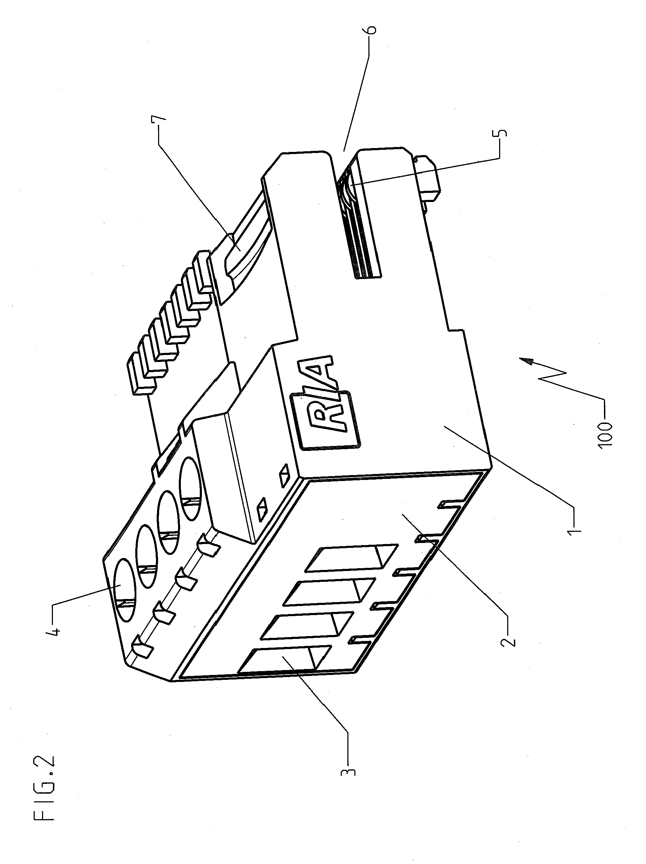

Der einzige Unterschied zwischen der Darstellung der steckbaren Klemme 100 gemäß Figur 2 und ihrer Darstellung in Figur 1 besteht darin, dass der als Speicherkarte ausgeführte Speicher 7 für Daten im eingeschobenen Zustand dargestellt ist, in dem er auslesbar und beschreibbar ist.

In der Schnittdarstellung der Figur 3 ist besonders gut zu erkennen, wie die Verbindung zum Lese- und/oder Schreibzugriff der nicht dargestellten Leiterplatte auf Daten, die im hier als SD-Karte ausgeführten Speicher 7 mittels der zweiten Verbindungselemente 5 hergestellt wird.

Hierzu ist eine Kontaktfeder 8 vorgesehen, die eine elektrisch leitende Verbindung zwischen einer am Speicher 7 vorgesehenen Kontaktfläche 16 und den ebenfalls als Kontaktfedern ausgeführten zweiten Verbindungselementen 5 herstellt. In der Ausführungsform, die in Figur 3 dargestellt ist, werden sowohl die Kontaktfeder 8 als auch die zweiten Verbindungselemente 5 durch Abschnitte eines einzigen Kontakts 9 gebildet und sind somit einstückig miteinander verbunden.

Es wird explizit darauf hingewiesen, dass grundsätzlich statt der zweiten Verbindungselemente 5 auch eine drahtlose Verbindung beispielsweise basierend auf der RFID-Technik oder einer optischen Verbindung zwischen der Leiterplatte eines elektronischen Geräts und dem Speicher 7 vorgesehen sein kann.

Der Vollständigkeit halber wird anhand der Schnittdarstellung gemäß Figur 4 auch noch kurz die Funktionsweise der steckbaren Klemme 100 im Hinblick auf die Verbindung von nicht dargestellten Daten- und/oder Versorgungsleitungen mit der nicht dargestellten Leiterplatte beschrieben. Die nicht dargestellten Daten- und/oder Versorgungsleitungen werden mit einem nicht isolierten Endabschnitt in die jeweiligen Drahteinführungsöffnungen 3 eingeführt und dort mittels in den jeweils zugehörigen Öffnungen 4 angeordneten Klemmschrauben 13 fixiert. Dazu werden die Klemmschrauben 13 weiter durch die Öffnungen 4 in einen Klemmkörper 11 hineingedreht, wodurch der Klemmkörper 11, da der Kopf der Klemmschraube 13 in der Öffnung 4 anschlägt, in Richtung zum Kopf der Klemmschraube 13 gezogen wird und somit der Endabschnitt der Daten- und/oder Versorgungsleitung zwischen einem Kontaktbügel 12, der an dem dem Kopf der Klemmschraube 13 abgewandten Ende der Klemmschraube 13 anliegt, und dem Klemmkörper 11 klemmend fixiert wird. Der Kontaktbügel 12 steht in elektrisch leitender Verbindung zu den ersten Verbindungselementen 15; in der Darstellung der Figur 4 sind beide einstückig miteinander verbunden jeweils als Abschnitte eines Stanz-Biegeteils ausgeführt.

Bei in die schlitzförmige Öffnung 6 eingeführten Leiterplattenrandkontakten einer nicht dargestellten Leiterplatte wird somit eine elektrisch leitende Verbindung über die ersten Verbindungselemente 15 und den Kontaktbügel 12 zu den Daten-und/oder Versorgungsleitungen hergestellt, wobei Klemmkörper 11, Kontaktbügel 12 und Klemmschraube 13 als exemplarische Ausführungsform eines Klemmelements zusammenwirken.

**Bezugszeichenliste**

| | |
|---|---|
| 1 | Klemmengehäuse |
| 2 | Deckel für Klemmengehäuse |
| 3 | Drahteinführungsöffnung |
| 4 | Öffnung für Klemmschraube |
| 5 | zweites Verbindungselement |
| 6 | schlitzförmige Öffnung |
| 7 | Speicher |
| 8 | Kontaktfeder |
| 9 | Kontakt |
| 11 | Klemmkörper |
| 12 | Kontaktbügel |
| 13 | Klemmschraube |
| 14 | Aufnahmeschacht |
| 15 | erstes Verbindungselement |
| 16 | Kontaktfläche |
| 100 | steckbare Klemme |

## Patentansprüche

1. Steckbare Klemme (100) mit Klemmelementen zum Anschluss mindestens eines elektrischen oder optischen Leiters und mit ersten Verbindungselementen (15) zum Verbinden des mindestens einen elektrischen oder optischen Leiters mit einem elektronischen Gerät,
**dadurch gekennzeichnet, dass** die steckbare Klemme (100) einen Speicher (7) für Daten aufweist und dass Mittel zum Auslesen und/oder Speichern von Daten im Speicher durch das elektronische Gerät vorgesehen sind.

2. Steckbare Klemme (100) nach Anspruch 1,
**dadurch gekennzeichnet, dass** die Mittel zum Auslesen und/oder Speichern von Daten im Speicher durch das elektronische Gerät als in der Klemme (100) angeordnete elektrische und/oder optische Kontakte (9) ausgebildet sind.

3. Steckbare Klemme (100) nach Anspruch 1 oder 2,
**dadurch gekennzeichnet, dass** die Mittel zum Auslesen und/oder Speichern von Daten im Speicher durch das elektronische Gerät als eine drahtlose Verbindung zwischen dem Speicher (7) und dem elektronischen Gerät ausgebildet sind.

4. Steckbare Klemme (100) nach einem der vorhergehenden Ansprüche,
**dadurch gekennzeichnet, dass** die ersten Verbindungselemente (15) als Kontaktstifte ausgebildet sind.

5. Steckbare Klemme (100) nach einem der Ansprüche 1 bis 3,
**dadurch gekennzeichnet, dass** die ersten Verbindungselemente (15) als Federkontakte ausgebildet sind.

6. Steckbare Klemme (100) nach einem der Ansprüche 1 bis 3,
**dadurch gekennzeichnet, dass** die ersten Verbindungselemente (15) als Leiterplattenrandkontakte ausgebildet sind.

7. Steckbare Klemme (100) nach einem der vorhergehenden Ansprüche,
**dadurch gekennzeichnet, dass** der Speicher (7) steckbar mit der steckbaren Klemme (100) verbunden ist.

8. Steckbare Klemme (100) nach Anspruch 7,
**dadurch gekennzeichnet, dass** der steckbare Speicher (7) als Speicherkarte ausgebildet ist.

9. Steckbare Klemme (100) nach Anspruch 7 oder 8,
**dadurch gekennzeichnet, dass** die steckbare Klemme (100) elektrische Kontakte (9) zur Kontaktierung des steckbaren Speichers (7) besitzt, die mit zweiten Verbindungselementen (5) zur Verbindung mit dem elektronischen Gerät elektrisch verbunden sind.

10. Steckbare Klemme (100) nach Anspruch 9,
**dadurch gekennzeichnet, dass** die elektrischen Kontakte (9) zur Kontaktierung des steckbaren Speichers (7) jeweils einstückig mit einem zweiten Verbindungselement (5) zur Verbindung mit dem elektronischen Gerät ausgeführt sind.

11. Steckbare Klemme (100) nach Anspruch 10,
**dadurch gekennzeichnet, dass** die einstückig ausgeführten elektrischen Kontakte (9) und zweiten Verbindungselemente (5) Stanz- oder Stanz-Biegeteile sind.

12. Steckbare Klemme (100) nach einem der Ansprüche 7 bis 10,
**dadurch gekennzeichnet, dass** der Speicher (7) in einer Richtung in die steckbare Klemme (100) einsteckbar ist, die zumindest eine Komponente aufweist, die entgegen der Steckrichtung der steckbaren Klemme (100) gerichtet ist.

13. Steckbare Klemme (100) nach einem der vorhergehenden Ansprüche,
**dadurch gekennzeichnet, dass** der Speicher (7) von außen durch eine Öffnung in die steckbare Klemme (100) einsteckbar ist.

14. Mittels Konfigurationsdaten konfigurierbares elektronisches Gerät mit einer daran lösbar angeordneten, steckbaren Klemme (100),
**dadurch gekennzeichnet, dass** die steckbare Klemme (100) einen Speicher (7) für die Konfigurationsdaten aufweist.

15. Mittels Konfigurationsdaten konfigurierbares elektronisches Gerät mit einer daran lösbar angeordneten, steckbaren Klemme (100),
**dadurch gekennzeichnet, dass** die steckbare Klemme (100) als steckbare Klemme (100) gemäß einem der Ansprüche 1 bis 13 ausgebildet ist.
